# EUROPEAN PATENT APPLICATION

(11) **EP 1 681 847 A1**
(43) Date of publication of application: **19.07.2006**
(21) Application number: 05000479.5
(22) Date of filing: 12.01.2005
(51) Int. Cl.: H04N 3/233

(54) **Horizontal distortion correction circuit and display apparatus containing the same**

(71) Applicant: VIDEOCOLOR S.p.A., 03012 Anagni (IT)
(72) Inventor: Carrozzi, Giovanni, 03018 Paliano Frosinone (IT); Frivoli, Alessandro, 03012 Anagni (IT); Ambroselli, Angelo, 04021 Castelforte (LT) (IT)
(74) Representative: Arnold, Klaus-Peter

(57) **Abstract**

A horizontal distortion correction circuit and a display apparatus containing the same are disclosed. The power supply unit has a first group of components for having the complete voltage drop across the first capacitor and a second group of components for rectifying and clamping the voltage produced by the power supply unit; the driving unit has a first driving part and a second driving part for turning on and turning off said switch unit respectively; the control unit has a third group of components for taking the voltage across the first capacitor and a fourth group of components as peak detector for only having the East-West parabolic signal across the first capacitor.

## Description

### FIELD OF THE INVENTION

The present invention relates to a horizontal distortion correction circuit for cathode ray tubes used in a display apparatus, and particularly to an inside pincushion correction circuit suitable for slim display apparatus with high deflection currents and high inside pincushion distortion.

### BACKGROUND OF THE INVENTION

Display apparatus, such as television receivers and computer monitors, incorporating cathode ray tubes are known to be "flattened" in order to meet the growing needs of depth reduction, which has forced to develop yokes with high deflection angles and consequently with high deflection currents and high inside pincushion distortion.

A known solution to overcome the increasing geometric errors in flatter and shallower display apparatus is adaptation of the value of the S-capacitor during a certain time interval of the scanning time. The inside pin distortion can be compensated at the same time by modulating this time interval as a function of a frame frequent correction waveform.

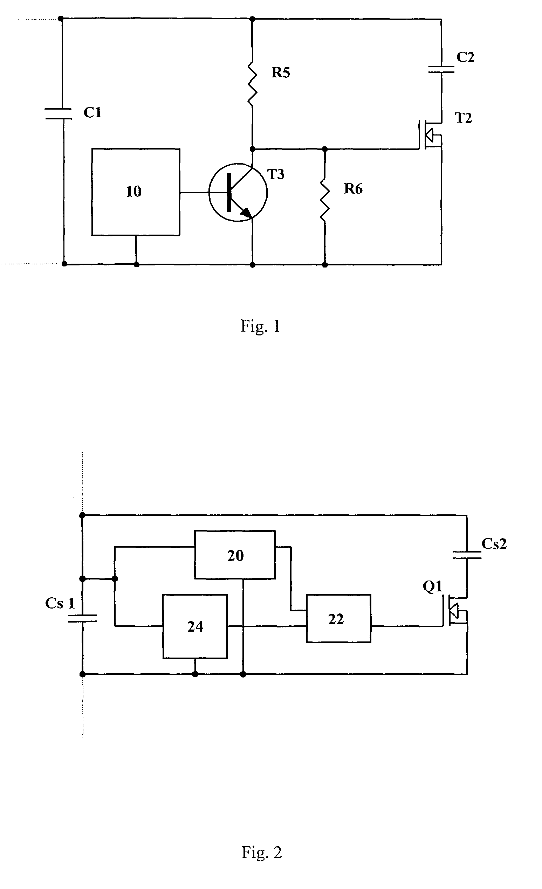

U.S. Pat. No. 6,459,219 discloses a deflection circuit which is based on a current got by the voltage across **C1** and forwarded for driving the MOSFET through the resistance **R5**. Fig. 1 is the simplified circuit diagram showing the driving mechanism thereof. The main drawback of this solution is the dimensioning of **R5**, which makes **R5** particularly critical. In other words, the performance of the correction circuit is too much dependent on the elements. It is not possible to have a good driving of the MOSFET and acceptable power dissipation at the same time. As known by the skilled in the art, a poor driving of the MOSFET will have a negative impact on the horizontal linearity. The situation will be even worse when implemented in a slim display apparatus with high horizontal current and high inside pincushion distortion. That is the reason why the above mentioned solution is proposed for NOT SLIM tubes with less horizontal current and inside pincushion distortion.

Accordingly, there exists a need for distortion correction circuit suitable for slim display apparatus, which should have greater reliability, less power dissipation and requires less space in the display apparatus.

### SUMMARY OF THE INVENTION

In one aspect of the present invention, a horizontal distortion correction circuit is provided to meet this need. The horizontal distortion correction circuit includes a power supply unit for supplying the driving power to the circuit; a first capacitor; a second capacitor; a switch unit for selectively connecting or disconnecting the second capacitor to and from the first capacitor in parallel; a driving unit for driving the turning-on and turning-off of the switch unit; and a control unit for controlling the time of the turning-on or turning-off according to the operation of the first capacitor, the power supply unit has a first group of components for having the complete voltage drop across the first capacitor and a second group of components for rectifying and clamping the voltage produced by the power supply unit; the driving unit has a first driving part and a second driving part for turning on and turning off the switch unit respectively; the control unit has a third group of components for taking the voltage across the first capacitor and a fourth group of components as peak detector for only having the East-West parabolic signal across the first capacitor.

According to the present invention, the first driving part of the horizontal distortion correction circuit includes a first transistor, whose emitter connected to the switch unit via a resistor and the second driving art includes a second transistor, whose collector connected to the base of the first transistor directly and to the emitter of the first transistor via a first diode.

According to the present invention, the first group of components of the horizontal distortion correction circuit could be a third capacitor as a capacitive reactance and the second group of components could be diodes.

In another aspect of the present invention, a display apparatus containing the horizontal distortion correction circuit is provided. The display apparatus includes a cathode ray tube incorporating a display screen and device for producing an electron beam for illuminating the display screen; a deflection yoke for producing horizontal and vertical deflection fields in order to deflect the electron beam; a distortion correction device for modifying at least one of the horizontal and vertical deflection fields produced by the deflection yoke in order to correct distortion; and a chassis for supporting the circuits inside the cathode ray tube, the distortion correction device at least comprises a horizontal distortion correction circuit, the horizontal distortion correction circuit including: a power supply unit for supplying the driving power to the circuit; a first capacitor; a second capacitor; a switch unit for selectively connecting or disconnecting the second capacitor to and from the first capacitor in parallel; a driving unit for driving the turning-on and turning-off of the switch unit; and a control unit for controlling the time of the turning-on or turning-off according to the operation of the first capacitor, the power supply unit has a first group of components for having the complete voltage drop across the first capacitor and a second group of components for rectifying and clamping the voltage produced by the power supply unit; the driving unit has a first driving part and a second driving part for turning on and turning off the switch unit respectively; the control unit has a third group of components for taking the voltage across the first capacitor and a fourth group of components as peak detector for only having the East-West parabolic signal across the first capacitor.

According to the present invention, the horizontal distortion correction circuit could be applied on the deflection yoke, which will save space in the display apparatus in order to meet the great need in depth reduction. Of course, the horizontal distortion correction circuit could also be applied conventionally on the chassis.

According to the present invention, the first driving part in the display apparatus includes a first transistor, whose emitter connected to the switch unit via a resistor and the second driving art includes a second transistor, whose collector connected to the base of the first transistor directly and to the emitter of the first transistor via a first diode.

According to the present invention, the first group of components in the display apparatus could be a third capacitor as a capacitive reactance and the second group of components in the display apparatus could be diodes.

### BRIEF DESCRIPTION OF THE DRAWINGS

Fig. 1 is a simplified circuit diagram showing the driving mechanism of the MOSFET in the prior art;
Fig. 2 is a basic block diagram showing a summarized horizontal distortion correction circuit according to the present invention;
Fig. 3 is a circuit diagram showing the proposed solution according to the present invention;
Fig. 4 is a schematic diagram showing a standard implementation on the chassis according to the present invention;
Fig. 5 is a schematic diagram showing another implementation on the yoke according to the present invention;
Fig. 6 is a detailed circuit diagram showing a preferred embodiment according to the present invention;
Fig. 7 is a detailed circuit diagram showing a more preferred embodiment according to the present invention;
Fig. 8 is a detailed circuit diagram showing a further more preferred embodiment according to the present invention;
Fig. 9 and Fig. 10 show waveforms of the driving signals;
Fig. 11 and Fig. 12 show the voltage and the current across the main S-capacitor; and
Fig. 13 shows the total voltage across the main S-capacitor.

### DETAILED DESCRIPTION OF THE PREFERRED EMBODIMENT

The technical features of the present invention will be described further with reference to the embodiments. The embodiments are only preferable examples without limiting to the present invention. It will be well understood by the following detail description in conjunction with the accompanying drawings.

The Fig. 2 is a basic block diagram showing a summarized horizontal distortion correction circuit according to the present invention. As shown in the Fig. 2, the power supply unit **24** is for supplying the driving power to the circuit, the capacitor **Cs1** is the main S-correction capacitor, the capacitor **Cs2** is the additional "S" capacitor in parallel with the main capacitor **Cs1,** the switch unit **Q1** is for selectively connecting or disconnecting the capacitor **Cs2** to and from the capacitor **Cs1,** the driving unit **22** is for driving the turning-on and turning-off of the switch unit **Q1,** and the control unit **20** is for controlling the time of the turning-on or turning-off according to the operation of the capacitor **Cs1**.

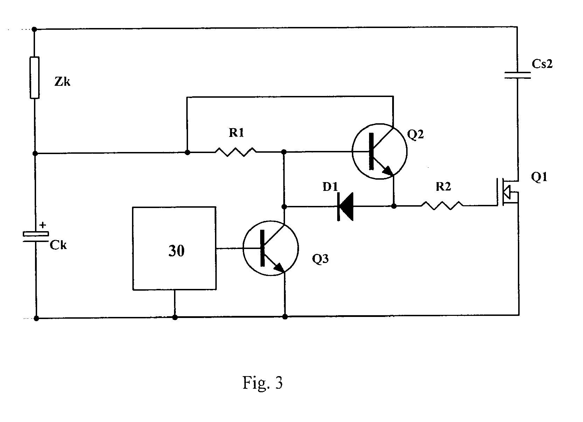

Fig. 3 is a circuit diagram showing the proposed solution according to the present invention. Referring to the Fig. 3, the driving unit is realized by the components **Q3, D1, Q2, R1, R2,** for the turn on and turn off of the MOSFET **Q1. Q3** and **D1** are in charge for the turn off while **Q2** and **R1** are in charge for the turn on. It is worth to note that when **Q2** is saturated the gate of the MOSFET **Q1** is on low impedance path that can permit a quick charge (turn on) of the Cgs (capacitance gate-source). The benefit is a dramatic reduction of the switching power dissipation. The control unit **30** is in charge of controlling the transistor **Q3**.

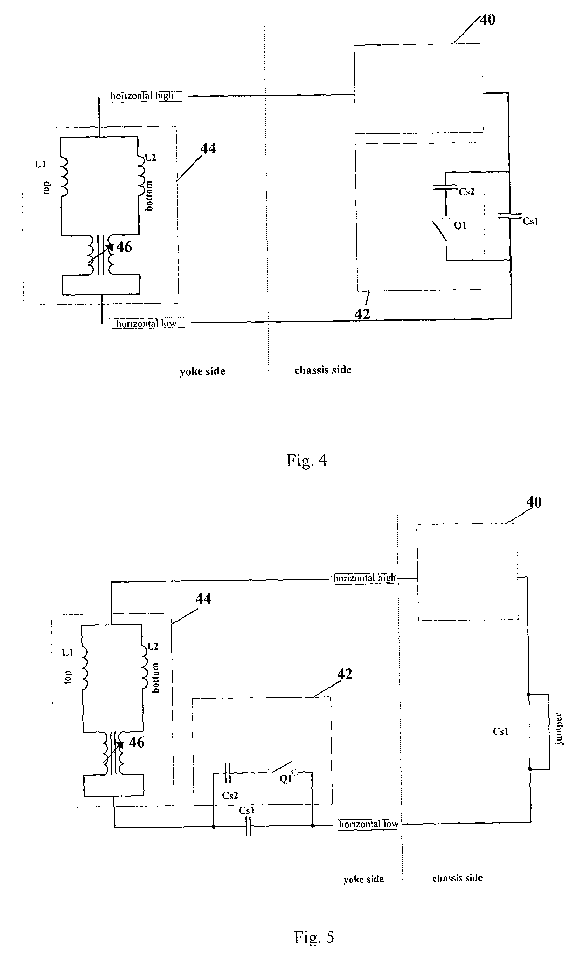

Fig. 4 is a schematic diagram showing a standard implementation on the chassis according to the present invention. Fig. 5 is a schematic diagram showing another implementation on the yoke according to the present invention. Comparing Fig. 4 with Fig. 5, it's obvious to see the horizontal distortion circuit including the main and additional capacitor could be implemented both on the chassis and on the yoke. In both figures, the horizontal deflection unit **40** is on the chassis side while the deflection yoke **44** including the variable inductor **46** is on the yoke side. The inside pin correction unit **42** and the main S-capacitor **Cs1** could be implemented either on the chassis side or on the yoke side. As shown in the Fig. 5, when the horizontal distortion circuit is applied on the yoke side, the original position of the main capacitor **Cs1** on the chassis side will be substituted with a jumper.

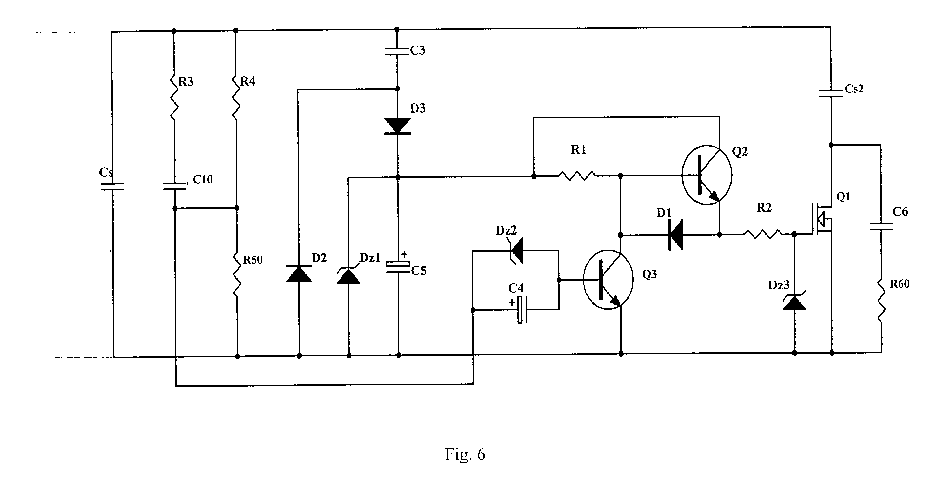

Fig. 6 is a detailed circuit diagram showing a preferred embodiment according to the present invention. **C3, D3, D2, Dz1, C5** are used for obtain a very efficient voltage generator (+ 12 V). The concept is to use a circuit like a "current pump": **C5** is charged by the voltage across **Cs** trough **C3** and **D3. D2** and **Dz1** are clamping the voltage. **Q3, D1, Q2, R1** are the drive for the turn on and turn off of the MOSFET: **Q3** and **D1** are in charge for the turn off; **Q2** and **R1** are in charge for the turn on. It is worth to note that when **Q2** is saturated the gate of the MOSFET **Q1** is on low impedance path that can permit a quick charge (turn on) of the Cgs (capacitance gate-source). The benefit is a dramatic reduction of the switching power dissipation. **R2**, **Dz3** are for a standard and usual protection.

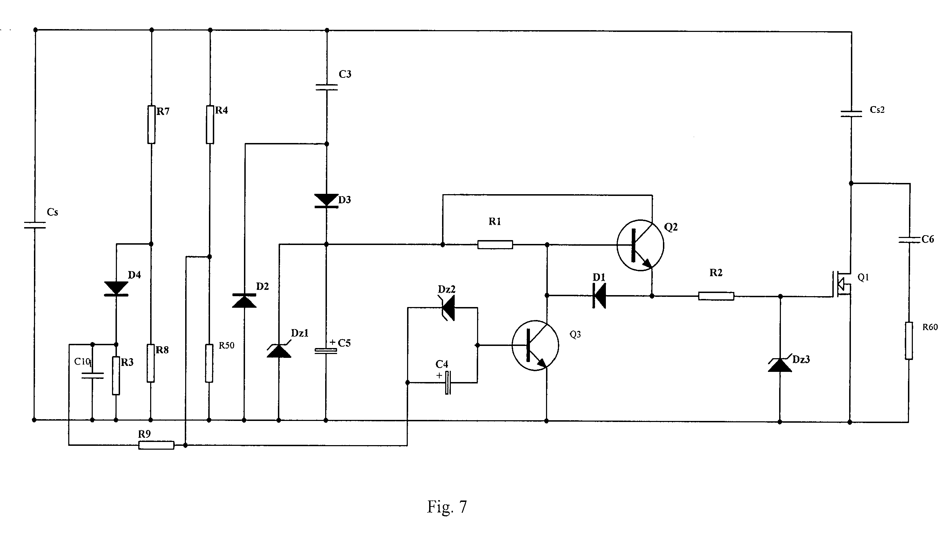

Fig. 7 is a detailed circuit diagram showing a more preferred embodiment according to the present invention. The functions of the same components already involved in Fig. 6 are omitted. The arrangement of **R7, R8** is a new resistor divider introduced in order to take separate S voltage information. The arrangement of **D4**, **C10**, **R3** acts as a low pass filter and peak detector in order to have only the EW parabola signal. **R9** is a decoupling resistance.

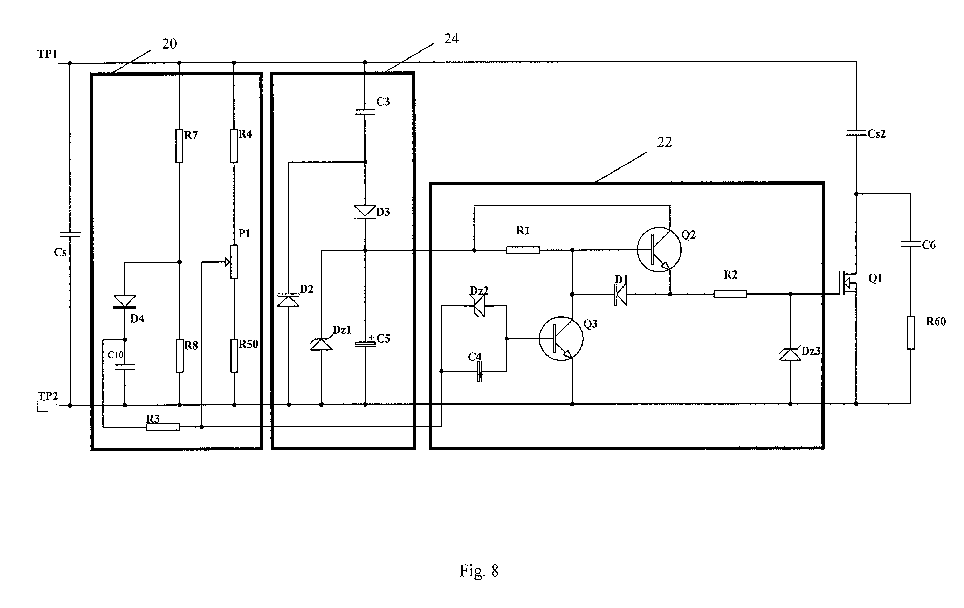

Fig. 8 is a detailed circuit diagram showing the best mode for implementing the present invention. As shown in Fig. 8, the complete diagram of the horizontal distortion correction circuit proposed by the present invention is illustrated. The power supply unit **24** is realized by the components **C3**, **D3**, **D2**, **Dz1**, **C5**. The capacitor **C3** is used as capacitive reactance on which drops almost the total voltage, while the diodes **D3**, **D2** and **Dz1** are used to rectifier and to clamp the voltage (12V) produced on the capacitor C5. The driving unit 22 is realized by the components **Q3, D1, R1, Q2, R2.** Wherein, **Q3** and **D1** are in charge for turn OFF the MOSFET **Q1** while **Q2** and **R2** are in charge for the turn ON of the MOS FET **Q1.** It is worth to note that when **Q2** is saturated a low impedance circuit drives the gate of the MOSFET **Q1** that permits a quick charge (turn ON) of the Cgs, with very low power dissipation. The control unit 20 provides the signal able to drive the MOSFET **Q1.** It's realized by two group of components. The first group of components are **R4, P1, R50,** as the resistor divider, that take the parabolic (line) voltage across the main S-capacitor **Cs** and compare with the **Dz2** voltage (4.7V). The second group of component are **R7, D4, R8, C10, R3,** acting as a peak detector that take the EW (frame) parabolic signal across the main S-capacitor **Cs** and also allow an amplification of the duty cycle frame modulation already realized by the first group of components. With the mentioned second group of components, it has been possible to have high pincushion correction. The value of the added capacitor has been strongly reduced and therefore a strong reduction of the power dissipation on the MOSFET **Q1** is achieved.

The table 1 below lists the values of the most relevant components in the horizontal distortion correction circuit shown in Fig. 8 for a Thomson A68TF super slim tube. However, the same principle will work for other tubes and/or other applications as well.

**Table 1**

| **COMPONENT** | **VALUE** | **COMPONENT** | **VALUE** |
|---|---|---|---|
| R3 | 1KΩ | R8 | 22KΩ |
| D3 | In4148 | C10 | 47nF |
| D4 | In4148 | R2 | 100 |
| D2 | ln4148 | R60 | 100 |
| C6 | 1nF | R7 | 100KΩ |
| R50 | 2.2KΩ | Cs2 | 150nF |
| C3 | 2.2nF | Cs | 180nF |
| R1 | 4.7KΩ | R4 | 220KΩ |
| Dz2 | 4.7V | C5 | 220µF |
| P1 | 10KΩ | D1 | BA159 |
| C4 | 10µF | Q2 | BC337 |
| Dz1 | 12V | Q3 | BC548B |
| Dz3 | 12V | Q1 | IRF640 |

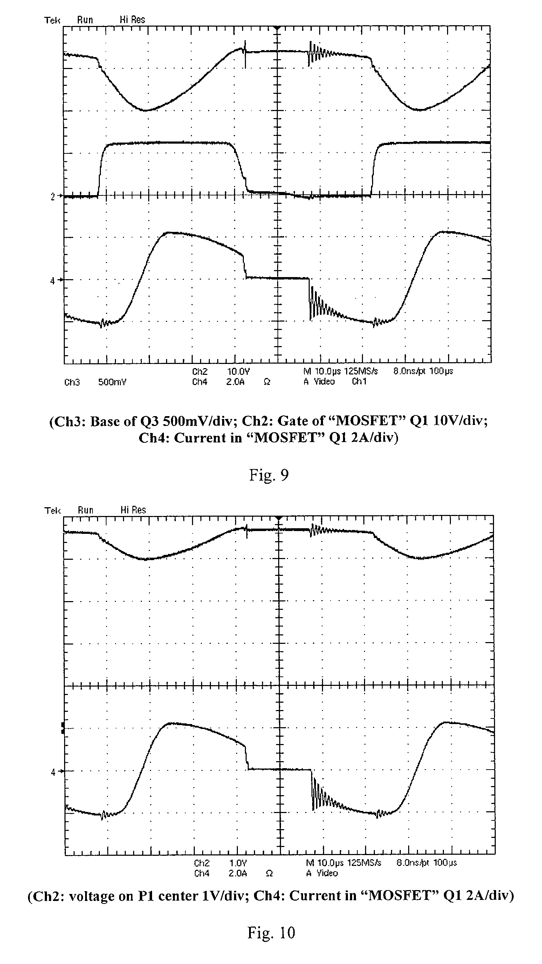

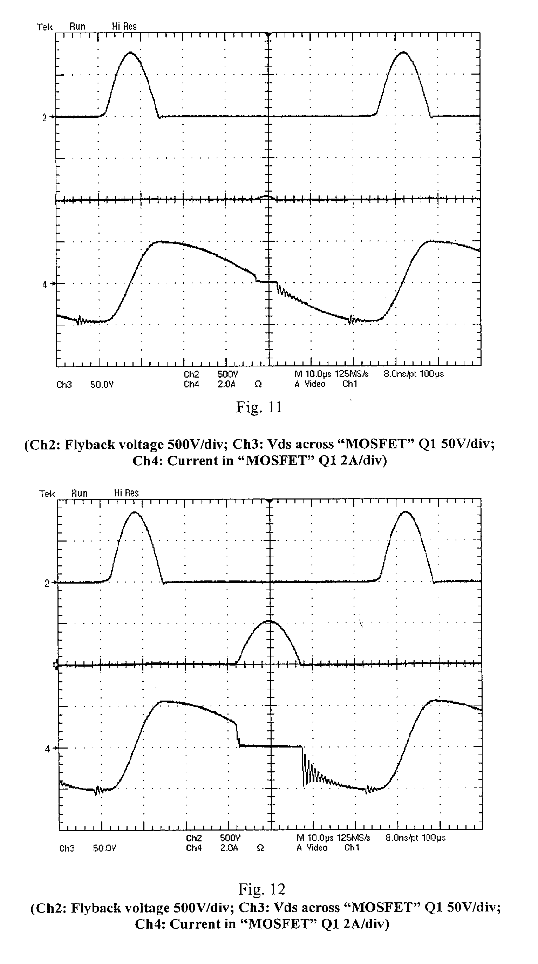

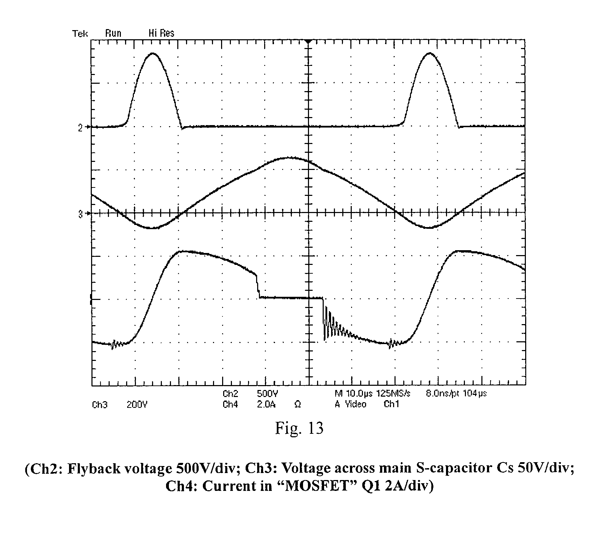

Fig. 9 and Fig. 10 show waveforms of the driving signals; Fig. 11 and Fig. 12 show the voltage and the current across the main S-capacitor **Cs**; and Fig. 13 shows the total voltage across the main S-capacitor **Cs**.

Whilst there has been described in the forgoing description preferred embodiments and aspects of the present invention, it will be understood by those skilled in the art that many variations in details of design or construction may be made without departing from the present invention. The present invention extends to all features disclosed both individually, and in all possible permutations and combinations.

## Claims

1. A horizontal distortion correction circuit, including: a power supply unit (24) for supplying the driving power to said circuit; a first capacitor (Cs1); a second capacitor (Cs2); a switch unit (Q1) for selectively connecting or disconnecting said second capacitor to and from said first capacitor (Cs1) in parallel; a driving unit (22) for driving the turning-on and turning-off of said switch unit (Q1); and a control unit (20) for controlling the time of said turning-on or turning-off according to the operation of said first capacitor (Cs1), **characterized in that** said power supply unit (24) has a first group of components for having the complete voltage drop across said first capacitor (Cs1) and a second group of components for rectifying and clamping the voltage produced by said power supply unit; said driving unit has a first driving part and a second driving part for turning on and turning off said switch unit respectively; said control unit (20) has a third group of components for taking the voltage across said first capacitor (Cs1) and a fourth group of components as peak detector for only having the East-West parabolic signal across said first capacitor (Cs1).

2. The horizontal distortion correction circuit according to claim 1, **characterized in that** said first driving part includes a first transistor (Q2), whose emitter connected to said switch unit (Q1) via a resistor (R2) and said second driving art includes a second transistor (Q3), whose collector connected to the base of said first transistor (Q2) directly and to the emitter of said first transistor (Q2) via a first diode (D1).

3. The horizontal distortion correction circuit according to claim 1 or 2, **characterized in that** said first group of components could be a third capacitor (C3) as a capacitive reactance and said second group of components could be diodes.

4. A display apparatus comprising: a cathode ray tube incorporating a display screen and device for producing an electron beam for illuminating said display screen; a deflection yoke for producing horizontal and vertical deflection fields in order to deflect said electron beam; a distortion correction device for modifying at least one of said horizontal and vertical deflection fields produced by said deflection yoke in order to correct distortion; and a chassis for supporting the circuits inside said cathode ray tube,
Wherein said distortion correction device at least comprises a horizontal distortion correction circuit, said horizontal distortion correction circuit including: a power supply unit (24) for supplying the driving power to said circuit; a first capacitor (Cs1); a second capacitor (Cs2); a switch unit (Q1) for selectively connecting or disconnecting said second capacitor to and from said first capacitor (Cs1) in parallel; a driving unit (22) for driving the turning-on and turning-off of said switch unit (Q1); and a control unit (20) for controlling the time of said turning-on or turning-off according to the operation of said first capacitor (Cs1), said power supply unit (24) has a first group of components for having the complete voltage drop across said first capacitor (Cs1) and a second group of components for rectifying and clamping the voltage produced by said power supply unit (24); said driving unit (22) has a first driving part and a second driving part for turning on and turning off said switch unit (Q1) respectively; said control unit (20) has a third group of components for taking the voltage across said first capacitor (Cs1) and a fourth group of components as peak detector for only having the East-West parabolic signal across said first capacitor (Cs1).

5. The display apparatus according to claim 4, **characterized in that** said horizontal distortion correction circuit is located on said deflection yoke.

6. The display apparatus according to claim 4, **characterized in that** said horizontal distortion correction circuit is located on said chassis.

7. The display apparatus according to any one of claims 4 to 6, **characterized in that** said first driving part includes a first transistor (Q2), whose emitter connected to said switch unit (Q1) via a resistor (R2) and said second driving art includes a second transistor (Q3), whose collector connected to the base of said first transistor (Q2) directly and to the emitter of said first transistor (Q2) via a first diode (D1).

8. The display apparatus according to any one of claims 4 to 6, **characterized in that** said first group of components could be a third capacitor (C3) as a capacitive reactance and said second group of components could be diodes.

9. The display apparatus according to claim 7, **characterized in that** said first group of components could be a third capacitor (C3) as a capacitive reactance and said second group of components could be diodes.
